(19) Europäisches Patentamt
European Patent Office
Office européen des brevets

(11) **EP 3 929 312 A1**

(12) **EUROPEAN PATENT APPLICATION**
published in accordance with Art. 153(4) EPC

(43) Date of publication:
**29.12.2021 Bulletin 2021/52**

(51) Int Cl.:
***C21C 5/30*** (2006.01)   ***C21C 5/46*** (2006.01)

(21) Application number: **20784186.7**

(22) Date of filing: **24.03.2020**

(86) International application number:
**PCT/JP2020/013154**

(87) International publication number:
**WO 2020/203504 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2019 JP 2019070519**

(71) Applicant: **JFE Steel Corporation**
**Tokyo 100-0011 (JP)**

(72) Inventors:
• **AMANO Shota**
  **Tokyo 100-0011 (JP)**
• **TAKAHASHI Yukio**
  **Tokyo 100-0011 (JP)**
• **KASE Hiroto**
  **Tokyo 100-0011 (JP)**
• **KIKUCHI Naoki**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD FOR PREDICTING SLOPPING OF CONVERTER FURNACE, METHOD FOR OPERATING CONVERTER FURNACE, AND SYSTEM FOR PREDICTING SLOPPING OF CONVERTER FURNACE**

(57)     The present invention is to, during decarburization refining of molten pig iron in a converter, predict the occurrence of slopping without needing a sensor to detect the slopping to be mounted inside the converter or at a position very close to the inside of the converter, and without generating a time delay.

The present invention resides in a method for predicting the slopping in the converter, the method predicting the slopping occurred during the decarburization refining in the converter in which molten steel is produced from the molten pig iron by blowing oxidizing gas to the molten pig iron in the converter from a top blowing lance, or additionally blowing oxidizing gas or inert gas from a bottom blowing tuyere to perform the decarburization refining of the molten pig iron, the method including measuring an emission spectrum of a throat combustion flame blowing out from a throat of the converter, calculating emission intensity of the measured emission spectrum at a wavelength in a range of 580 to 620 nm, and predicting the occurrence of the slopping based on a time-series change of the calculated emission intensity.

FIG. 1

**Description**

Technical Field

The present invention relates to a method and a system for, during decarburization refining of molten pig iron in a converter, predicting the occurrence of slopping (blow-out of slag and molten iron from the converter). The present invention further relates to a method for operating a converter, the method enabling oxygen blowing to be performed on molten pig iron while ensuring prevention of the occurrence of the slopping.

Background Art

Molten pig iron tapped from a blast furnace is charged into a converter, and oxidizing gas (oxygen gas) is supplied, from a top blowing lance or a bottom blowing tuyere, to the molten pig iron having been charged into the converter to perform decarburization refining of the molten pig iron in the converter, and molten steel is obtained by steelmaking from the molten pig iron. In that type of converter, the oxidizing gas is blown into the converter (referred to as "oxygen blowing") to dissolve flux in slag, whereby the slag is formed and impurity elements (such as P and Si) contained in the molten pig iron are removed into the slag. In trying to sufficiently dissolve the flux in the slag, however, this may often bring about the so-called "slopping" that the produced slag causes foaming and the slag and the molten iron (the molten pig iron or the molten steel) in the converter plop out with bumping to the outside of the converter through a throat during the oxygen blowing.

It is said that, particularly when a large amount of iron oxide sources (such as iron ore and mill scale) is added into the converter or when the converter is operated in a soft-blow mode, the slopping occurs because an oxygen accumulation (FeO amount) in the slag increases and a decarburization reaction $(C + O \rightarrow CO)$ bursts out at an interface between the slag and the molten iron (the molten pig iron or the molten steel), thus generating a large amount of CO gas.

The slopping disturbs components of the molten steel, reduces a tapping yield, and hence gives rise to various problems such as an increase of a decarburization refining time, a decrease of a gas recovery rate in OG equipment (non-combustion exhaust gas treatment equipment), deterioration of a working environment, and failures of peripheral devices. To cope with those problems, various slopping prediction methods have been proposed in the past.

For example, Patent Literature 1 proposes a slopping prediction method of measuring vibration of a top blowing lance by a vibration sensor mounted on the top blowing lance, calculating a percentage of signals with amplitudes greater than a preset amplitude value among all measured vibration signals within a certain time, and determining that the slopping occurs when the calculated percentage exceeds a predetermined setting value.

Patent Literature 2 proposes a refining method of projecting a microwave to a slag surface in a converter, capturing the microwave reflected from the slag surface, calculating a frequency of a mixed wave of the projected wave and the reflected wave and/or a microwave reflectance at the slag surface, detecting a slag level and a slag formation situation based on the calculated value(s), and setting and controlling related influential factors such that the slag level and the slag formation situation are maintained in a preset reference state.

Patent Literature 3 proposes a converter refining method of, in a converter exhaust-gas treatment apparatus in which exhaust gas generating from a converter is recovered after cooling and dedusting the exhaust gas, determining a slag situation based on information detected by an acoustic meter, an exhaust gas composition analysis, and a dust densitometer, and controlling, based on a determination result, a lance height, an oxygen feed flow rate, a top and bottom blowing ratio, and an amount of added auxiliary raw materials to suppress the occurrence of slopping and/or spitting.

Citation List

Patent Literature

PTL 1: Japanese Unexamined Patent Application Publication No. 6-248321
PTL 2: Japanese Unexamined Patent Application Publication No. 59-41409
PTL 3: Japanese Unexamined Patent Application Publication No. 6-256832

Summary of Invention

Technical Problem

However, the above-mentioned related-art techniques have problems given below.

Patent Literature 1 uses the vibration sensor, and Patent Literature 2 uses a microwave slag level meter. Thus, the slopping prediction methods using those sensors need the sensors to be mounted inside the converter or at a position very close to the inside of the converter. Because the mounted sensors are exposed very close to the molten steel, the slag, the exhaust gas, and so on which flow violently inside the converter during the oxygen blowing, there are problems with durability and continuous operability of the equipment.

According to Patent Literature 3, the measurement is performed in an exhaust gas duct of the converter exhaust-gas treatment equipment, and a relatively stable operation can be realized because an atmosphere temperature in the exhaust gas duct is low. However, a problem arises in that a delay is generated in measurement timing corresponding to a time during which the exhaust gas moves to a measurement position in the exhaust gas duct.

The present invention has been accomplished in consideration of the above-described state of the art, aiming to achieve the following objects. One object of the present invention is to provide a prediction method and a prediction system for, during decarburization refining of molten pig iron in a converter, predicting the occurrence of the slopping without needing a sensor to detect the slopping to be mounted inside the converter or at a position very close to the inside of the converter, and without generating a time delay. Another object of the present invention is to provide a method for operating a converter, the method enabling oxygen blowing to be performed on molten pig iron while ensuring prevention of the occurrence of the slopping. Solution to Problem

The gist of the present invention intended to solve the above-described problems is as follows.

[1] A method for predicting slopping in a converter, the method predicting the slopping occurred during decarburization refining in the converter in which molten steel is produced from molten pig iron by blowing oxidizing gas to the molten pig iron in the converter from a top blowing lance, or additionally blowing oxidizing gas or inert gas from a bottom blowing tuyere to perform the decarburization refining of the molten pig iron, the method including:

measuring an emission spectrum of a throat combustion flame blowing out from a throat of the converter;
calculating emission intensity of the measured emission spectrum at a wavelength in a range of 580 to 620 nm; and
predicting occurrence of the slopping based on a time-series change of the emission intensity calculated.

[2] The method for predicting the slopping in the converter according to [1], further including detecting an inflection point at which the emission intensity turns to increase again after being once reduced, and predicting the occurrence of the slopping upon detection of the inflection point.

[3] The method for predicting the slopping in the converter according to [1] or [2], in which the time-series change of the emission intensity is determined using a moving average.

[4] The method for predicting the slopping in the converter according to [1] or [2], in which the time-series change of the emission intensity is determined in accordance with a determination formula using a moving average.

[5] The method for predicting the slopping in the converter according to [4], in which formulae (1) to (3) given below are used as the determination formulae, and a prediction result indicating the occurrence of the slopping is determined when the formulae (1) to (3) are all satisfied

[Math. 1]

$$I\,(n,\ m_0) \geq C_0 \quad \cdots (1)$$

$$\frac{I\,(n-L_1,\ m_1) - I\,(n-2L_1,\ m_1)}{I\,(n-2L_1,\ m_1)} \leq C_1 \quad \cdots (2)$$

$$\frac{I\,(n,\ m_2) - I\,(n-L_2,\ m_2)}{I\,(n-L_2,\ m_2)} \geq C_2 \quad \cdots (3)$$

$$\frac{I\,(n-L_1,\ m_1) - I\,(n-2L_1,\ m_1)}{I\,(n-2L_1,\ m_1)} \leq C_1 \quad \cdots (2)$$

$$\frac{I(n,\ m_2) - I(n-L_2,\ m_2)}{I(n-L_2,\ m_2)} \geq C_2 \cdots (3)$$

where $I(n, m_0)$ denotes a moving average (a.u.) of an emission intensity index from a measurement point $n-m_0$ to a measurement point n, $I(n-L_1, m_1)$ denotes a moving average (a.u.) of the emission intensity index from a measurement point $n-L_1-m_1$ to a measurement point $n-L_1$, $I(n-2L_1, m_1)$ denotes a moving average (a.u.) of the emission intensity index from a measurement point $n-2L_1-m_1$ to a measurement point $n-2L_1$, $I(n,m_2)$ denotes a moving average (a.u.) of the emission intensity index from a measurement point $n-m_2$ to the measurement point n, $I(n-L_2, m_2)$ denotes a moving average (a.u.) of the emission intensity index from a measurement point $n-L_2-m_2$ to a measurement point $n-L_2$, $C_0$, $C_1$ and $C_2$ are determination thresholds and satisfy relations of $C_0 > 0$, $C_2 > 0$, and $C_1 < C_2$, $L_1$ and $L_2$ are constants and are each an integer of 1 or more, and $m_0$, $m_1$ and $m_2$ are constants and are each an integer of 0 or more.

[6] The method for predicting the slopping in the converter according to [5], in which the determination thresholds $C_0$, $C_1$ and $C_2$ in the formulae (1) to (3) are determined by utilizing one or more of a transition of the emission intensity, a flow rate of exhaust gas, components of the exhaust gas, a feed rate of oxygen gas from the top blowing lance, and a lance height of the top blowing lance during oxygen blowing.

[7] The method for predicting the slopping in the converter according to [5], in which the determination thresholds $C_0$, $C_1$ and $C_2$ in the formulae (1) to (3) are determined through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

[8] A method for operating a converter in which molten steel is produced from molten pig iron, when a prediction result indicating occurrence of slopping is determined by the method for predicting the slopping in the converter according to any one of [1] to [7], the method including performing, upon determination of the prediction result indicating the occurrence of the slopping, one or two or more of an adjustment of a flow rate of oxidizing gas blown from the top blowing lance, an adjustment of a lance height of the top blowing lance, an adjustment of a height position of a movable hood, an adjustment of a flow rate of oxidizing gas or inert gas injected from the bottom blowing tuyere, and adding of a sedation material.

[9] A system for predicting slopping in a converter, the system predicting the slopping occurred during decarburization refining in the converter in which molten steel is produced from molten pig iron by blowing oxidizing gas to the molten pig iron in the converter from a top blowing lance, or additionally blowing oxidizing gas or inert gas from a bottom blowing tuyere to perform the decarburization refining of the molten pig iron, the system including:

a spectroscopic camera disposed around the converter and capturing an image of a throat combustion flame through a gap between the converter and a movable hood; and
an image analyzer recording, in a retrievable manner, image data sent from the spectroscopic camera, calculating emission intensity of an emission spectrum of the image data at a wavelength in a range of 580 to 620 nm, and predicting occurrence of the slopping based on a time-series change of the emission intensity calculated.

[10] The system for predicting the slopping in the converter according to [9], further including a control computer issuing a control signal to change an operation condition in accordance with data input from the image analyzer.

[11] The system for predicting the slopping in the converter according to [9] or [10], in which the image analyzer detects an inflection point at which the emission intensity turns to increase again after being once reduced, and predicts the occurrence of the slopping upon detection of the inflection point.

[12] The system for predicting the slopping in the converter according to any one of [9] to [11], in which the image analyzer calculates the time-series change of the emission intensity in accordance with a determination formula using a moving average.

[13] The system for predicting the slopping in the converter according to [12], in which formulae (1) to (3) given below are used as the determination formula, and a prediction result indicating the occurrence of the slopping is determined when the formulae (1) to (3) are all satisfied

[Math. 2]

$$I(n,\ m_0) \geq C_0 \cdots (1)$$

$$\frac{I\,(n-L_1,\ m_1)-I\,(n-2L_1,\ m_1)}{I\,(n-2L_1,\ m_1)} \leq C_1 \quad \cdots (2)$$

$$\frac{I\,(n,\ m_2)-I\,(n-L_2,\ m_2)}{I\,(n-L_2,\ m_2)} \geq C_2 \quad \cdots (3)$$

where $I(n, m_0)$ denotes a moving average (a.u.) of an emission intensity index from a measurement point $n-m_0$ to a measurement point n, $I(n-L_1, m_1)$ denotes a moving average (a.u.) of the emission intensity index from a measurement point $n-L_1-m_1$ to a measurement point $n-L_1$, $I(n-2L_1, m_1)$ denotes a moving average (a.u.) of the emission intensity index from a measurement point $n-2L_1-m_1$ to a measurement point $n-2L_1$, $I(n,m_2)$ denotes a moving average (a.u.) of the emission intensity index from a measurement point $n-m_2$ to the measurement point n, $I(n-L_2, m_2)$ denotes a moving average (a.u.) of the emission intensity index from a measurement point $n-L_2-m_2$ to a measurement point $n-L_2$, $C_0$, $C_1$ and $C_2$ are determination thresholds and satisfy relations of $C_0 > 0$, $C_2 > 0$, and $C_1 < C_2$, $L_1$ and $L_2$ are constants and are each an integer of 1 or more, and $m_0$, $m_1$ and $m_2$ are constants and are each an integer of 0 or more.

[14] The system for predicting the slopping in the converter according to [13], in which the image analyzer includes a machine learning model to determine the determination thresholds $C_0$, $C_1$ and $C_2$ in the formulae (1) to (3) through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

[15] The system for predicting the slopping in the converter according to [13], further including a machine learning computer that includes a machine learning model to determine the determination thresholds $C_0$, $C_1$ and $C_2$ in the formulae (1) to (3) through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

Advantageous Effects of Invention

With the method and the system for predicting the slopping in the converter according to the present invention, the occurrence of the slopping is predicted by measuring the emission spectrum of the throat combustion flame. Therefore, the occurrence of the slopping can be predicted without needing a sensor to detect the slopping to be mounted inside the converter or at a position very close to the inside of the converter, and without generating a time delay. With the method for operating the converter according to the present invention, since a slopping prevention countermeasure is carried out at the time when a prediction result indicating the occurrence of the slopping is obtained, the occurrence of the slopping can be stably suppressed.

Brief Description of Drawings

[Fig. 1] Fig. 1 is a schematic view illustrating a configuration of converter equipment suitable for implementing the present invention.
[Fig. 2] Fig. 2 is a graph illustrating a time-series change of an emission intensity index during oxygen blowing in a heat in which slopping has occurred.
[Fig. 3] Fig. 3 is a graph illustrating a time-series change of the emission intensity index during the oxygen blowing in a heat in which slopping has not occurred.
[Fig. 4] Fig. 4 is a schematic view illustrating another configuration of the converter equipment suitable for implementing the present invention.

Description of Embodiments

The inventors intensively conducted studies with an intent to, in decarburization refining performed in a converter for producing molten steel from molten pig iron through oxidation refining of the molten pig iron, predict the occurrence of the slopping during oxygen blowing in real time without a time delay. More specifically, the inventors monitored, during the decarburization refining in the converter, an internal situation of the converter at the occurrence of the slopping in real time. It is known that the slopping occurs when slag in the converter is in a foaming state.

As a result of the studies, the inventors focused attention on a throat combustion flame in the converter as a factor useful to precisely grasp the internal situation of the converter in real time and came up with the idea of measuring an emission spectrum of the throat combustion flame at predetermined time intervals in the decarburization refining. Here, the term "throat combustion flame" implies a flame inside the converter, the flame blasting from the throat of the converter toward a flue on an upper side.

The emission spectrum of the throat combustion flame contains not only information regarding CO gas generated by the decarburization reaction (C + O → CO) in the converter, but also information regarding $CO_2$ gas produced by spontaneous combustion that is caused upon mixing of part of the produced CO gas and air sucked through the throat of the converter. The emission spectrum further contains information regarding FeO* (intermediate product) attributable to iron atoms that are evaporated from an ignition point inside the converter (namely, from a position at which oxidizing gas from a top blowing lance collides against the surface of a molten pig iron bath). The inventors found that the internal situation of the converter can be easily estimated in real time if it is possible to, for a wavelength in a range of 580 to 620 nm in the emission spectrum, measure emission intensity in real time per wavelength.

The wavelength in a range of 580 to 620 nm in the emission spectrum corresponds to a FeO orange system band attributable to formation and disappearance of FeO* (intermediate product) and is different from a wavelength band of an intermediate product of hydrocarbon gas. Furthermore, the inventors confirmed that an absorption peak is observed in the above-mentioned wavelength band when FeO* (intermediate product) is formed, while an emission peak is observed in the same wavelength band when FeO* (intermediate product) disappears. In addition, the inventors confirmed that the emission intensity is correlated with a disappearance rate of FeO* (intermediate product). In the following, "FeO* (intermediate product)" is simply denoted by "FeO*".

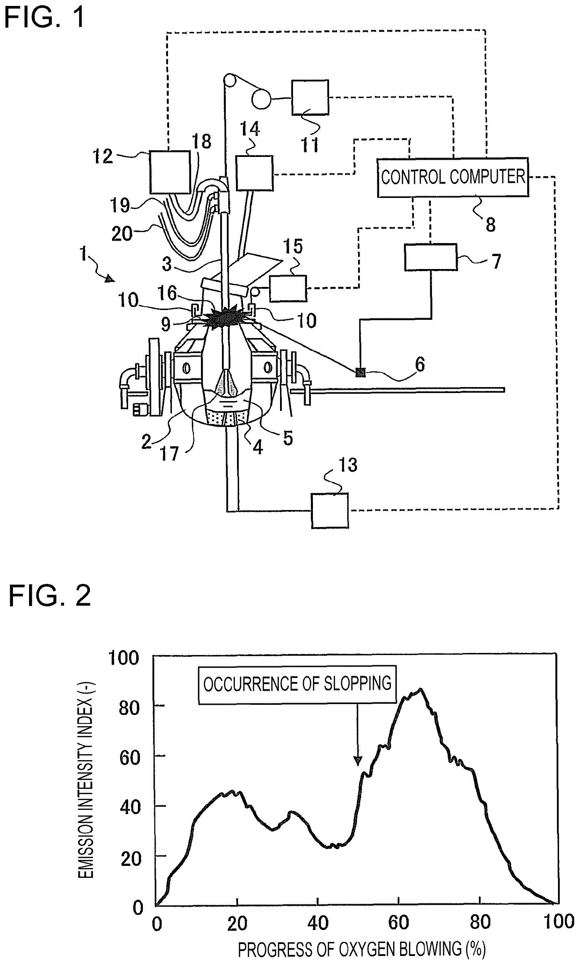

From the above-mentioned point of view, the inventors measured the emission spectrum of the throat combustion flame in the converter in time-series order during the decarburization refining in the converter. The emission spectrum of the throat combustion flame in the converter was measured, as illustrated in Fig. 1 (details of which will be described later), by mounting a spectroscopic camera 6 at front of a converter 2 and capturing an image of a throat combustion flame 16 appearing through a gap between a throat 9 and a movable hood 10. The image captured by the spectroscopic camera 6 was sent to an image analyzer 7. In the image analyzer 7, the image was recorded and the emission intensity per each of emission wavelengths was analyzed by executing a line analysis of input image data on any scan line. The measurement of the emission spectrum and the analysis of the emission intensity were performed with an interval between measurement points, namely a measurement time interval Δt, set to 1 sec.

From the obtained measurement results of the emission spectrum, a wavelength of 610 nm at which a change width was the largest during the decarburization refining was set to a specific wavelength (wavelength used in the analysis), and a time-series change of the emission intensity was obtained by calculating the emission intensity at the wavelength of 610 nm at each time of measurement during the decarburization refining. When obtaining the time-series change of the emission intensity, the emission intensity normalized on an assumption of setting, to 1, the emission intensity in the image data captured by the spectroscopic camera 6 at the throat before starting the oxygen blowing was defined as an "emission intensity index", and the time-series change of the emission intensity was obtained using the emission intensity index. Of course, the time-series change can also be obtained using the emission intensity that is not normalized.

In the above-described studies, a converter (with a capacity of 300 tons) capable of blowing oxidizing gas from a top blowing lance 3 and blowing stirring gas from a bottom blowing tuyere 4 at the bottom of the converter was used. Oxygen gas (industrial pure oxygen gas) was used as the oxidizing gas blown from the top blowing lance, and argon gas was used as the stirring gas injected from the bottom blowing tuyere. The top blowing lance used here was a top blowing lance including de Laval blowing nozzles serving as five oxygen-gas blowing nozzles mounted at a tip end of the lance with an blowing angle of 15°. Here, the injection angle of the blowing nozzle is a relative angle between an oxygen-gas blowing direction of the blowing nozzle and an axial direction of the top blowing lance.

In the above-described converter, the decarburization refining was performed on molten pig iron with a carbon concentration of 3.5% by mass. Supply of the oxygen gas from the top blowing lance was started at a time at which a carbon content of the molten pig iron was 3.5% by mass, and was continued until a time at which a carbon content of molten iron in the converter reached 0.04% by mass.

A flow rate of the oxygen gas from the top blowing lance was set to 800 to 1000 Nm3/min, a lance height of the top blowing lance was set to 2.5 to 3.0 m, and a flow rate of the stirring gas from the bottom blowing tuyere was set to 5 to 30 Nm3/min. Here, the term "lance height of the top blowing lance" implies a distance from the tip end of the top blowing lance to the surface of the molten pig iron bath inside the converter when measured in a stationary state.

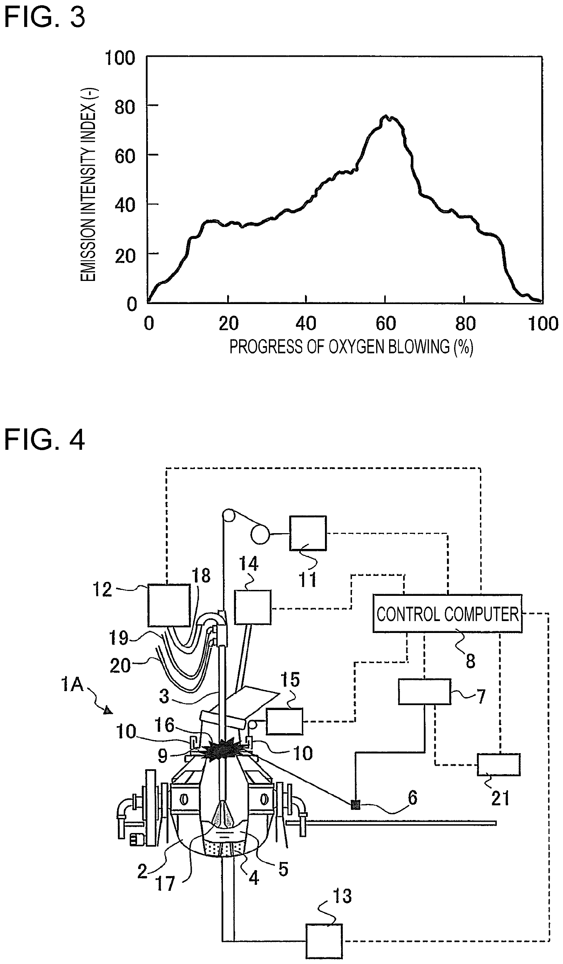

Fig. 2 is a graph illustrating a time-series change of the emission intensity index during the oxygen blowing in a heat in which the slopping has occurred, the emission intensity index being calculated in accordance with the above-described method. Fig. 3 is a graph illustrating a time-series change of the emission intensity index during the oxygen blowing in a heat in which the slopping has not occurred, the emission intensity index being calculated in accordance with the above-described method. A decarburization refining time in the heat, illustrated in Fig. 2, in which the slopping has occurred was 19.5 min, and a decarburization refining time in the heat, illustrated in Fig. 3, in which the slopping has not occurred was 18.0 min. A progress of the oxygen blowing represented by a horizontal axis in each of Figs. 2 and 3 is defined by the following formula (4).

$$\text{Progress of oxygen blowing} = (Q_{O2C}/Q_{OO2}) \times 100 \quad ...(4)$$

where $Q_{O2C}$ denotes a cumulative amount of oxygen ($Nm^3$) during a period from the start of the oxygen blowing to a certain time, and $Q_{O2}$ denotes a cumulative amount of oxygen ($Nm^3$) at the end of the oxygen blowing.

As seen from Figs. 2 and 3, as the oxygen blowing progresses, the emission intensity index increases in a front half of the oxygen blowing (namely, in a period in which the progress of the oxygen blowing is in a range of 60% to 70%) regardless of the occurrence of the slopping. On the other hand, in a second half of the oxygen blowing, as the oxygen blowing progresses, the emission intensity index decreases.

However, as illustrated in Fig. 2, in the heat in which the slopping has occurred, the emission intensity index having started to increase with the progress of the oxygen blowing is once reduced even in the first half of the oxygen blowing, and then the slopping occurs after the emission intensity index has started to increase again.

The above phenomenon is considered to result from the fact that, at the time of the occurrence of the slopping, because the slag in the converter causes foaming, an apparent thickness of the slag increases and a reduction reaction of FeO stagnates, namely the decarburization reaction stagnates, due to a blocking effect produced by an increase in the apparent thickness of the slag, whereby the emission intensity index is once reduced. The reason why the emission intensity index increases again thereafter is considered to reside in the fact that, because the reduction reaction of FeO has stagnated, an FeO amount in the slag becomes excessive and a decarburization reaction (FeO + C → Fe + CO) starts to generate again at an interface between the slag and the molten iron, thus causing the emission intensity index to increase again.

From the above-described result, the inventors found that the time-series change of the emission intensity index can be utilized to predict the slopping.

In the heat in which the slopping has not occurred, as illustrated in Fig. 3, the emission intensity index increases with the progress of the blowing and reaches a maximum value in a medium stage of the blowing. Then, in a period toward an end stage of the blowing, the emission intensity index decreases because a reduction reaction rate of the iron oxide is reduced.

In consideration of the point that the emission intensity index forms an increasing and decreasing pattern, the inventors compared the time-series change of the emission intensity index between the heat in which the slopping has occurred and the heat in which the slopping has not occurred. As a result, it was found that, in the case of the occurrence of the slopping, the time-series change of the emission intensity index has the feature mentioned below, for example. The slopping occurs when a present value of the emission intensity index increases 20% or more from a value of the emission intensity index at a measurement point 10 sec before the current time, and the emission intensity index at the measurement point 10 sec before the current time is equal to or smaller than that at a measurement point 80 sec before the current time. The above point is similarly applied to the measurement values of the emission intensity which are not normalized.

Thus, it was suggested that a behavior of each of the emission intensity and the emission intensity index continuously decreasing or stagnating for a certain time (about 70 sec) and thereafter turning to a significant increase as described above (the behavior being defined as an "inflection point" in this Description) is observed when the slopping has occurred. In other words, it was suggested that the occurrence of the slopping can be predicted by detecting an appearance of the inflection point in the time-series changes of the emission intensity and the emission intensity index.

In the heat, illustrated in Fig. 2, in which the slopping has occurred, there are two periods (valleys of the emission intensity index) in which the emission intensity index is once reduced and thereafter turns to increase. An increase rate of the emission intensity index for each of the two valleys in comparison with the emission intensity index at a measurement point 10 sec before a measurement point corresponding to each valley is smaller in the first valley (at the time when the progress of the oxygen blowing is about 30%) than in the second valley (at the time when the progress of the oxygen blowing is about 45%). Thus, the first valley (at the time when the progress of the oxygen blowing is about 30%) is considered as suggesting the occurrence of slag foaming that does not lead to the slopping. On other hand, in the second valley (at the time when the progress of the oxygen blowing is about 45%), the increase rate of the emission intensity index in comparison with the emission intensity index at the measurement point 10 sec before exceeds 20%, and the slopping has occurred after the emission intensity index has passed the second valley. It is hence considered that the occurrence of the slopping can be more precisely predicted by detecting the appearance of the inflection point like the second valley in the time-series changes of the emission intensity and the emission intensity index.

When utilizing the emission intensity index to predict the slopping, the slopping can also be predicted by comparing the emission intensity index given as an instantaneous value (actual value) that is not a moving average, as seen from the behaviors illustrated in Figs. 2 and 3. It was, however, confirmed that the slopping can be more precisely predicted by utilizing a moving average of the emission intensity index during a certain period. Here, the term "moving average" implies a value resulting from dividing the sum of changing data over a certain span by the number of pieces of the data and represents a method of smoothing time-series data.

A variation is reduced by taking moving averages of the emission intensity (actual values) and the emission intensity index. By appropriately selecting counting numbers in calculations of the moving averages, in the heat in which the slopping does not occur, the moving average of the emission intensity index can be caused to, for example, monotonously increase until the emission intensity index reaches a maximum value and to monotonously decrease after the emission intensity index has reached the maximum value. The emission intensity (actual value) also behaves in a similar manner to the emission intensity index.

In addition, it was confirmed that the occurrence of the slopping can be even more precisely predicted by calculating the time-series changes of the emission intensity and the emission intensity index in accordance with determination formulae using the moving averages.

For example, the following formulae (1) to (3) can be used as the determination formulae using the moving averages of the emission intensity index with respect to a measurement point n. By using the formulae (1) to (3), the above-described inflection point can be easily detected. Here, the measurement point n denotes a measurement point at a certain time during the decarburization refining and corresponds to a current measurement point.

[Math. 3]

$$I(n, m_0) \geq C_0 \quad \cdots (1)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

In the above formulae, $I(n, m_0)$ denotes a moving average (a.u.) of the emission intensity index from a measurement point $n-m_0$ to a measurement point n, $I(n-L_1, m_1)$ denotes a moving average (a.u.) of the emission intensity index from a measurement point $n-L_1-m_1$ to a measurement point $n-L_1$, $I(n-2L_1, m_1)$ denotes a moving average (a.u.) of the emission intensity index from a measurement point $n-2L_1-m_1$ to a measurement point $n-2L_1$, $I(n,m_2)$ denotes a moving average (a.u.) of the emission intensity index from a measurement point $n-m_2$ to the measurement point n, $I(n-L_2, m_2)$ denotes a moving average (a.u.) of the emission intensity index from a measurement point $n-L_2-m_2$ to a measurement point $n-L_2$, $C_0$, $C_1$ and $C_2$ are determination thresholds and satisfy relations of $C_0 > 0$, $C_2 > 0$, and $C_1 < C_2$, $L_1$ and $L_2$ are constants and are each an integer of 1 or more, and $m_0$, $m_1$ and $m_2$ are constants and are each an integer of 0 or more.

Here, the formula (1) implies that only data with a value of $C_0$ or more is used as the determination data. By setting such a condition, the determination can be made by excepting background noise and data measured in a blackout period in which a visual field of the spectroscopic camera has been blocked off for a short time. The formula (2) represents a change amount of the emission intensity index during a period from the measurement point $n-2L_1$ to the measurement point $n-L_1$, namely during a period a little before the current time. The formula (3) represents a change amount of the emission intensity index during a period from the measurement point $n-L_2$ to the measurement point n, namely during a period immediately before the current time.

The formulae (2) and (3) are normalized using $I(n-2L_1, m_1)$ and $I(n-L_2, m_2)$, respectively. The normalization is intended to remove influences caused by an absolute value of the emission intensity varying for each heat. Moreover, in the present invention, because of detecting the inflection point in the time-series change, namely the phenomenon that the emission intensity index is once reduced in a period a little before the current time and thereafter turns to increase immediately before the current time, $C_2 > 0$ and $C_1 < C_2$ are satisfied.

Each of $L_1$ and $L_2$ represents the number of measurement points going back from the current time. Assuming a measurement time interval to be $\Delta t$ (sec), $L_1 \times \Delta t$ and $L_2 \times \Delta t$ each represent a period (sec) going back from the current time. Moreover, each of $m_0$, $m_1$ and $m_2$ represents the number of measurement points falling in a backward moving average range. Assuming the measurement time interval to be $\Delta t$ (sec), $m_1 \times \Delta t$, $m_2 \times \Delta t$, and $m_3 \times \Delta t$ each represent a time span (sec) in which the backward moving average is to be calculated.

On an assumption that the slopping occurs when the formulae (1) to (3) are all satisfied, tests for predicting the occurrence of the slopping during the decarburization refining in accordance with the above-described formulae (1), (2) and (3) were conducted while the determination thresholds $C_0$, $C_1$ and $C_2$ and the constants $L_1$, $L_2$, $m_0$, $m_1$ and $m_2$ were varied.

Table 1 indicates the test results. In these tests, a wavelength of 610 nm was set to the specific wavelength, and even when a prediction result indicating the occurrence of the slopping was determined, operation conditions were not changed to prevent the occurrence of the slopping.

[Table 1]

| | Constant | | Threshold | | | Determination Result | |
|---|---|---|---|---|---|---|---|
| | $L_1$, $L_2$ | $m_0$, $m_1$, $m_2$ | $C_0$ | $C_1$ | $C_2$ | Slopping heat | Normal heat |
| | | | | | | Determination Success Rate (%) | Normal Detection Rate (%) |
| Level 1 | 10 | 20 | 15 | 0.65 | 0.7 | 68 | 82 |
| Level 2 | 10 | 10 | 15 | 0 | 1.0 | 52 | 65 |
| Level 3 | 15 | 15 | 10 | 0 | 0.8 | 45 | 62 |
| Level 4 | 15 | 20 | 15 | 0.65 | 0.7 | 53 | 89 |
| Level 5 | 10 | 15 | 10 | 0.65 | 0.7 | 62 | 72 |
| Level 6 | 10 | 15 | 5 | 0.65 | 0.7 | 64 | 42 |

Number of heats performed: 100 heats for each test

As seen from Table 1, it was found that the slopping can be stably predicted by appropriately selecting the counting numbers in the calculations of the moving averages of the emission intensity index and the determination thresholds. Here, "Determination Success Rate" in Table 1 implies a percentage of the heats for which it succeeded to predict the slopping 60 sec or more before the time of the actual occurrence of the slopping. "Normal Detection Rate" implies a percentage of the heats for which the prediction result indicating the occurrence of the slopping was not determined with respect to the heats in which the slopping did not occur, namely a percentage of the heats in which false detection did not occur.

A method for predicting the slopping in the converter, a system for predicting the slopping in the converter, and a method for operating the converter according to the present invention are accomplished by conducting further studies based on the above-described findings. Details in carrying out the method for predicting the slopping in the converter, the system for predicting the slopping in the converter, and the method for operating the converter according to the present invention will be described below with reference to the drawings. Fig. 1 is a schematic view illustrating a configuration of converter equipment suitable for implementing the present invention.

Converter equipment 1 suitable for carrying out the present invention includes the converter 2, the top blowing lance 3, the spectroscopic camera 6 disposed around the converter 2 to be able to capture the image of the throat combustion flame 16, the image analyzer 7 recording, in a retrievable manner, the image captured by the spectroscopic camera 6 and analyzing the captured image, and a control computer 8 sending control signals based on data analyzed by the image analyzer 7.

The converter equipment 1 further includes a lance height controller 11 for adjusting a lance height of the top blowing lance 3, and an oxidizing-gas flow rate controller 12 for adjusting a flow rate of the oxidizing gas that is blown from the top blowing lance 3, those controllers being individually operable in accordance with the control signals sent from the control computer 8. The converter equipment 1 still further includes a bottom-blown gas flow rate controller 13 for adjusting a flow rate of the stirring gas injected from the bottom blowing tuyere 4, an auxiliary raw-material addition controller 14 for controlling brands and amounts of auxiliary raw materials to be added, which are stored in hoppers (not illustrated) disposed above the converter, and a movable-hood height position controller 15 for controlling a height position of the movable hood 10.

The lance height measured by the lance height controller 11, the feed rate of the oxidizing gas measured by the oxidizing-gas flow rate controller 12, the flow rate of the bottom-blown gas measured by the bottom-blown gas flow rate controller 13, the amount of the added auxiliary raw material measured by the auxiliary raw-material addition controller 14, and the height position of the movable hood measured by the movable-hood height position controller 15 are input to the control computer 8 for feedback control. In addition, a flow rate of exhaust gas measured by an exhaust gas flowmeter (not illustrated) disposed in the flue and measuring the flow rate of the exhaust gas discharged from the converter, and components of the exhaust gas measured by an exhaust-gas component meter (not illustrated) disposed in the flue and measuring components ($CO$, $CO_2$, and $O_2$) of the exhaust gas discharged from the converter are further input to the control computer 8.

In the converter 2 used in the present invention, an oxidizing-gas jet flow 17 can be blown from the top blowing lance 3 toward molten pig iron 5 in the converter and, at the same time, the stirring gas can be injected into the converter from the bottom blowing tuyere 4 at the bottom of the converter. Moreover, the spectroscopic camera 6 capable of measuring the emission spectrum of the throat combustion flame 16 in the converter is mounted around the converter 2. An image of the throat combustion flame 16 appearing through the gap between the throat 9 of the converter and the movable hood 10 is captured by the mounted spectroscopic camera 6.

A mounted position of the spectroscopic camera 6 can be optionally selected insofar as loads of heat, dust, and so on applied to the spectroscopic camera 6 are small enough to make the spectroscopic camera 6 endurable over time and the spectroscopic camera 6 can capture the image of the throat combustion flame 16 appearing through the gap between the throat 9 of the converter and the movable hood 10. For example, when the spectroscopic camera 6 is mounted at front of the converter 2, the image of the throat combustion flame 16 appearing through a small window (gap) disposed in a charging door to check the flame can be captured by the spectroscopic camera 6. Instead, an image-capturing window through which the image of the throat combustion flame 16 can be captured may be disposed on the backside (the side opposite to an operating room) of a wall surrounding a converter body or on the converter side (trunnion side), and the spectroscopic camera 6 may be mounted outside the window to capture the image of the throat combustion flame 16. As an alternative, the spectroscopic camera 6 may be mounted to a position even inside the wall surrounding the converter body if the spectroscopic camera 6 is endurable at that position.

The image (image data) captured by the spectroscopic camera 6 is sequentially sent to the image analyzer 7. The image analyzer 7 records the sent captured image (image data), executes a line analysis of the image data on any scan line, and analyzes emission wavelengths and the emission intensity for each of the emission wavelengths. Furthermore, the image analyzer 7 predicts the occurrence of the slopping based on an analysis result of the sent captured image (image data).

The image data of the throat combustion flame 16 having been analyzed by the image analyzer 7 is sent to the control computer 8 at each time of measurement together with a prediction result indicating the occurrence of the slopping. Similarly, operation data stored in the control computer 8, such as the feed rate of the oxygen gas from the top blowing lance, the lance height of the top blowing lance, the flow rate of the exhaust gas, and the components of the exhaust gas, is sent to the image analyzer 7 at each time of measurement.

Upon receiving, from the image analyzer 7, the prediction result indicating the occurrence of the slopping, the control computer 8 issues control signals for operating the lance height controller 11, the oxidizing-gas flow rate controller 12, the bottom-blown gas flow rate controller 13, the auxiliary raw-material addition controller 14, and the movable-hood height position controller 15 individually or simultaneously. Reference numeral 18 in Fig. 1 denotes a pipe for feeding the oxidizing gas to the top blowing lance, 19 denotes a pipe for feeding cooling water to the top blowing lance, and 20 denotes a pipe for draining the cooling water from the top blowing lance.

According to the present invention, molten steel is produced from the molten pig iron 5 with the converter equipment 1 by blowing the oxidizing gas from the top blowing lance 3, or additionally blowing the oxidizing gas or inert gas from the bottom blowing tuyere 4 toward the molten pig iron 5 contained in the converter 2, and by performing oxidation refining of the molten pig iron 5, namely the decarburization refining of the molten pig iron 5.

During the decarburization refining, the image of the throat combustion flame 16 is captured by the spectroscopic camera 6, and the obtained emission spectrum is analyzed to estimate a change of the internal situation of the converter 2 during the decarburization refining in real time. The slopping is predicted based on the estimated change of the internal situation of the converter. It is preferable to capture the image of the throat combustion flame 16 by the spectroscopic camera 6 and to analyze the emission spectrum at the measurement time interval $\Delta t$ set to 1 to 10 sec from the viewpoint of improving the productivity and increasing the yield of iron.

The emission spectrum obtained by capturing the flame image is recorded in the image analyzer 7 in a retrievable manner. The image analyzer 7 specifies the emission wavelengths in the wavelength in a range of 580 to 620 nm in the obtained emission spectrum of the throat combustion flame 16 and calculates the emission intensity for each of the specified emission wavelengths.

As described above, the wavelength in a range of 580 to 620 nm corresponds to the FeO orange system band that is attributable to the formation and the disappearance of FeO*. The inventors have confirmed that the absorption peak is observed when FeO* is formed in the above-mentioned wavelength band, while the emission peak is observed in the same wavelength band when FeO* disappears, and that the emission intensity is correlated to the disappearance rate of FeO*. In other words, since the wavelengths in the range of 580 to 620 nm reflect the reaction in the converter and give clues to easily estimate the internal situation of the converter, those wavelengths are selected as a measurement target. The emission intensity indicates the magnitude of emission energy when FeO is changed from an excited state (FeO*) to a ground state.

The image analyzer 7 calculates the emission intensity and the emission intensity index obtained per wavelength. In addition, the image analyzer 7 preferably calculates the moving average of the emission intensity index. Then, the image analyzer 7 estimates a change of the internal situation of the converter and predicts the occurrence of the slopping during the converter operation based on the calculated time-series changes of the emission intensity, the emission intensity index, and the moving average of the emission intensity index. On that occasion, it is preferable to detect the above-described inflection point and to predict the occurrence of the slopping in accordance with a detection result indicating the presence of the inflection point.

Preferably, the above-described formulae (1) to (3) are used as the determination formulae for predicting the slopping with the moving averages, and the prediction result indicating the occurrence of the slopping is determined when the formulae (1) to (3) are all satisfied. Because $C_0$, $C_1$ and $C_2$, namely the determination thresholds in the formulae (1) to (3), are different depending on the image-capturing environment and the operation conditions of each converter, a preliminary test is performed to measure the emission intensity and to set the determination thresholds such that a percentage of normal detection of the slopping based on the formulae (1) to (3) is maximized. In consideration of the advantage in the operation, $C_0$ to $C_2$ may also be determined such that the normal detection rate is maximized within a range in which false detection is kept the smallest.

Regarding the other constants $L_1$, $L_2$, $m_0$, $m_1$ and $m_2$, when each constant is set to a larger value, a trend of the detection becomes more moderate and over-detection (case of determining a state not under the slopping to be the occurrence of the slopping) is less likely to occur. However, if the values of those constants are set to be too large, sensitivity is reduced and it becomes difficult to detect the slopping before the occurrence of the slopping.

Furthermore, $\Delta t \times L_1$, $\Delta t \times L_2$, $\Delta t \times m_0$, $\Delta t \times m_1$, and $\Delta t \times m_2$ are previously set to maximize a percentage at which the normal detection of the slopping is made in accordance with the formulae (1) to (3), by performing a preliminary test while considering a time (about several ten seconds to hundred seconds) necessary to take countermeasures after the occurrence of the slopping is detected. When $\Delta t \times L_1$, $\Delta t \times L_2$, $\Delta t \times m_0$, $\Delta t \times m_1$, and $\Delta t \times m_2$ are each set to a time length corresponding to about 1% to 5% of the blowing time, a relatively good detection rate is obtained. In consideration of the advantage in the operation, those constants may also be determined such that the normal detection rate is maximized within the range in which the false detection is kept the smallest.

With the image analyzer 7, an operator can set the thresholds $C_0$, $C_1$ and $C_2$ and the constants $L_1$, $L_2$, $m_0$, $m_1$ and $m_2$ to any numerical values. Moreover, the image analyzer 7 has a machine learning model function of determining the determination thresholds $C_0$, $C_1$ and $C_2$ through machine learning by utilizing one or two or more of the transition of the emission intensity, the flow rate of the exhaust gas, the components of the exhaust gas, the feed rate of the oxygen gas from the top blowing lance, and the lance height of the top blowing lance during the oxygen blowing. In other words, the image analyzer 7 has a function of enabling $C_0$, $C_1$ and $C_2$ to be automatically set through the machine learning.

Furthermore, as illustrated in Fig. 4, a machine learning computer 21 with the machine learning model function may be disposed separately from the image analyzer 7. In this case, the above-described constants can be set as follows. First, for example, from the control computer 8 in which the operation data is recorded and from the image analyzer 7 in which emission intensity data of the throat combustion flame 16 is recorded, respectively, the operation data and the emission intensity data are sent to the machine learning computer 21 offline. The machine learning computer 21 executes the machine learning based on the received data, determines new values of the above-mentioned constants, and sends the determined values to the image analyzer 7. The image analyzer 7 receives new constants and makes determination in the next and subsequent operations by using the new constants.

Fig. 4 is a schematic view illustrating another configuration of the converter equipment suitable for implementing the present invention. Converter equipment 1A illustrated in Fig. 4 has a configuration in which the machine learning computer 21 is disposed in addition to the converter equipment 1 illustrated in Fig. 1. The other configuration is the same as that of the converter equipment 1 illustrated in Fig. 1. The same components are denoted by the same reference signs, and description of those components is omitted.

The specific wavelength used in calculating the emission intensity index is determined by previously measuring, among the wavelengths in the range of 580 to 620 nm, one wavelength at which the change amount of the emission intensity during the decarburization refining is the largest, or by monitoring multiple wavelengths within the above-mentioned wavelength band during the decarburization refining and determining, for each monitoring, one of the multiple wavelengths at which the change amount of the emission intensity is the largest.

With the method for operating the converter according to the present invention, at the time when the prediction result indicating the occurrence of the slopping is determined during the decarburization refining based on the calculated time-series change of the emission intensity, one or two or more of an adjustment of the flow rate of the oxidizing gas blown from the top blowing lance, an adjustment of the lance height, an adjustment of the height position of the movable hood, an adjustment of the flow rate of the oxidizing gas or the inert gas injected from the bottom blowing tuyere, and the addition of the sedation material into the converter are executed with intent to prevent the occurrence of the slopping and damage of the equipment. On that occasion, preferably, the time-series change of the emission intensity index is calculated using the determination formulae (1) to (3), and the prediction result indicating the occurrence of the slopping is determined when the formulae (1) to (3) are all satisfied.

A practical method to cope with the occurrence of the slopping is preferably performed in a manner of reducing the flow rate of the oxidizing gas blown from the top blowing lance, reducing the lance height of the top blowing lance, raising the height position of the movable hood to prevent the movable hood from being damaged by the slag, increasing the flow rate of the oxidizing gas or the inert gas injected from the bottom blowing tuyere, or adding the sedation material. More preferably, two or more of the above-described operations are performed in a combined manner. With the above-described adjustment, the slag foaming or a vigorous decarburization reaction can be suppressed before the occurrence of the slopping or at the very beginning of the occurred slopping. It is hence possible to avoid blow-out of the slag and the molten iron to the outside of the converter and to increase the iron yield.

Here, reducing the flow rate of the oxidizing gas blown from the top blowing lance, reducing the lance height of the top blowing lance, increasing the flow rate of the gas injected from the bottom blowing tuyere, and adding the sedation material are countermeasures of changing the operation conditions to prevent the occurrence of the slopping. Raising the height position of the movable hood is a countermeasure of changing the operation condition to prevent the damage of the equipment. Thus, it is desired to change at least the operation conditions to prevent the occurrence of the slopping. Lowering the height position of the movable hood to physically prevent the blowout of the slag is also an effective countermeasure from the viewpoint of reducing the blowout of the slag. In such a case, however, a reduction in the number of times the movable hood can be used needs to be taken into consideration.

Here, the term "sedation material" implies a steelmaking auxiliary raw material that suppresses the slag foaming by forming degassing paths in the slag inside the converter when added into the converter, and by improving outgassing from the slag under the foaming. In general, for example, a carbonaceous material, mill scale, or slag is used in the form granulated after being mixed with moisture or oil and fat, but any other suitable substance may also be used.

Preferably, a reduced amount of the flow rate of the oxidizing gas blown from the top blowing lance, a reduced amount of the lance height of the top blowing lance, a change amount of the height position of the movable hood, an increased amount of the flow rate of the oxidizing gas or the inert gas injected from the bottom blowing tuyere, and an amount of the added sedation material are determined in advance based on, for example, a ratio between a force of stirring the molten iron and the flow rate of the oxidizing gas.

In the converter equipment 1 suitable for implementing the present invention, preferably, each time when the determination formulae (1) to (3) are all satisfied, the control computer 8 issues a control signal to the lance height controller 11 to reduce the lance height, issues a control signal to the oxidizing-gas flow rate controller 12 to reduce the flow rate of the oxidizing gas blown from the top blowing lance, issues a control signal to the movable-hood height position controller 15 to raise the height position of the movable hood, issues a control signal to the bottom-blown gas flow rate controller 13 to increase the flow rate of the injected oxidizing gas or inert gas, issues a control signal to the auxiliary raw-material addition controller 14 to add a predetermined amount of the sedation material, or issues all those control signal at the same time.

The oxidizing gas blown from the top blowing lance 3 is generally oxygen gas (industrial pure oxygen gas). However, for example, a gas mixture of oxygen gas, rare gas such as argon gas or helium gas, and nitrogen gas, air, or an oxygen enriched air can also be used instead. The term "oxidizing gas" implies an oxygen-containing gas with an oxygen concentration greater than or equal to that of air. The gas injected from the bottom blowing tuyere 4 is the inert gas or the oxidizing gas. When the oxidizing gas is injected, the oxidizing gas functions not only as the oxidizing gas for the oxidation refining, but also as the stirring gas.

In determining the situation inside the converter based on a spectral analysis of the throat combustion flame 16, false detection may be resulted in some cases due to change of the situation, such as an event that the visual field is obstructed by the passage of a crane or deposition of a metal to the throat. Therefore, the determination thresholds $C_0$, $C_1$ and $C_2$ in the formulae (1) to (3) are desirably changed in the converter operation per heat.

In more detail, preferably, the determination thresholds $C_0$, $C_1$ and $C_2$ are determined by utilizing one or two or more of the transition of the emission intensity, the flow rate of the exhaust gas, the components of the exhaust gas, the feed rate of the oxygen gas from the top blowing lance, and the lance height of the top blowing lance during the oxygen blowing.

More preferably, the determination thresholds $C_0$, $C_1$ and $C_2$ are determined through the machine learning by utilizing one or two or more of the transition of the emission intensity, the flow rate of the exhaust gas, the components of the exhaust gas, the feed rate of the oxygen gas from the top blowing lance, and the lance height of the top blowing lance during the oxygen blowing.

While, in the above description, the calculations in accordance with the formulae (1) to (3) are executed using the emission intensity index, the calculations in accordance with the formulae (1) to (3) may be executed using the emission intensity at each time of measurement.

According to the present invention, as described above, since the occurrence of the slopping in the converter 2 performing the decarburization refining of the molten pig iron 5 is predicted by measuring the emission spectrum of the throat combustion flame, a sensor for detecting the slopping is no longer needed to be disposed inside the converter or at the position very close to the inside of the converter, and the occurrence of the slopping can be predicted without causing the time delay. Furthermore, since the countermeasure to prevent the slopping is carried out at the time when the prediction result indicating the occurrence of the slopping is obtained, the occurrence of the slopping can be stably suppressed.

EXAMPLE 1

The decarburization refining of the molten pig iron 5 was performed by using a top and bottom blown converter (oxygen gas blown from top and argon gas blown from bottom) with a capacity of 300 tons and a similar configuration to that of the converter 2 illustrated in Fig. 1. The top blowing lance 3 was given as a top blowing lance including five blowing nozzles in the form of de Laval nozzles mounted at a tip end of the lance with an blowing angle of 15°, the nozzles being arranged at equal intervals on the same circumference around an axis of the top blowing lance. Each of the blowing nozzles had a throat diameter $d_t$ of 73.6 mm and an outlet diameter $d_e$ of 78.0 mm.

First, iron scrap was charged into the converter, and molten pig iron of 300 tons, after being subjected to desulfurization and dephosphorization in advance, at temperature of 1310°C to 1360°C was charged into the converter. Table 2 indicates a chemical composition of the molten pig iron.

[Table 2]

| Chemical Composition of Molten Pig Iron (% by mass) | | | | | | | Temperature of Molten Pig Iron (°C) |
|---|---|---|---|---|---|---|---|
| C | Si | Mn | P | S | Cr | Fe | |
| 3.4 to 3.6 | 0.01 to 0.02 | 0.16 to 0.27 | 0.015 to 0.036 | 0.008 to 0.016 | tr | bal. | 1310 to 1360 |

Then, the decarburization refining of the molten pig iron was started by blowing, as the oxidizing gas, oxygen gas toward the surface of a molten pig iron bath from the top blowing lance 3 while argon gas was injected as the stirring gas into the molten pig iron from the bottom blowing tuyere 4. An amount of the charged iron scrap was adjusted such that a temperature of molten steel after the end of the decarburization refining was held at 1650°C.

Thereafter, quicklime was added as CaO-based flux during the decarburization refining from a hopper (not illustrated) disposed above the converter, and the decarburization refining was continued until a carbon concentration in the molten iron reached 0.05% by mass. An amount of the added quicklime was adjusted such that a basicity ((CaO % by mass) / (SiO$_2$ % by mass)) of slag formed in the converter was held at 2.5.

During the decarburization refining, an image of the throat combustion flame 16 appearing through the gap between the throat 9 of the converter 2 and the movable hood 10 was successively captured at the predetermined measurement time interval $\Delta t$: 1 sec by the spectroscopic camera 6 disposed substantially at front of the converter 2.

The image analyzer 7 measured an emission spectrum (image data) from the captured image and executed an analysis of specifying emission wavelengths in the wavelength in a range of 580 to 620 nm in the obtained emission spectrum at each time of measurement and calculating the emission intensity index per wavelength. The wavelength used here (namely, the specific wavelength) was 610 nm. The analysis was performed by executing a line analysis of the image data on any scan line.

The calculations in accordance with the above-described formulae (1) to (3) were executed using the emission intensity index obtained at the specific wavelength at each time of measurement. On that occasion, the determination thresholds in the formulae (1) to (3) were set to $C_0$ = 15, $C_1$ = 0.65, and $C_2$ = 0.7, and the constants were set to $L_1 = L_2$ = 10 and $m_0 = m_1 = m_2$ = 20.

The prediction result indicating the occurrence of the slopping was determined when the formulae (1) to (3) were all satisfied. At the time when the prediction result indicating the occurrence of the slopping was determined, one or two or more of the adjustment of the flow rate of the oxygen gas from the top blowing lance, the adjustment of the lance height of the top blowing lance, the adjustment of the height position of the movable hood, the adjustment of the flow rate of the oxidizing gas or the inert gas injected from the bottom blowing tuyere, and the addition of the sedation material into the converter were performed.

More specifically, the flow rate of the oxygen gas from the top blowing lance was adjusted to be reduced from 1000 $Nm^3$/min to 833 $Nm^3$/min, the lance height was adjusted to be reduced from 3.0 m to 2.5 m, and the flow rate of the bottom-blown gas was adjusted to be increased from 15 $Nm^3$/min to 30 $Nm^3$/min. The height position of the movable hood was adjusted to a position 500 mm higher than the height position of the movable hood at the time when the prediction result indicating the occurrence of the slopping was determined. The amount of the added sedation material was adjusted to 500 to 1500 kg.

The above-described adjustments were performed by issuing the control signals from the control computer 8 to the lance height controller 11, the oxidizing-gas flow rate controller 12, the bottom-blown gas flow rate controller 13, the auxiliary raw-material adding controller 14, and the movable-hood height position controller 15 to operate those controllers immediately after the time when the prediction result indicating the occurrence of the slopping was determined. Furthermore, at the time when any one of the formulae (1) to (3) was no longer satisfied, the flow rate of the oxygen gas from the top blowing lance, the lance height of the top blowing lance, the height position of the movable hood, and the flow rate of the oxidizing gas or the inert gas injected from the bottom blowing tuyere were returned to the values before the adjustments, and thereafter the decarburization refining was continued.

As a result of implementing the present invention, the incidence of the slopping was reduced to about 1/3 of that before implementing the present invention.

EXAMPLE 2

The decarburization refining of the molten pig iron 5 was performed in a similar manner to that in EXAMPLE 1 by using the same converter equipment (top and bottom blown converter) as in EXAMPLE 1.

During the decarburization refining, an image of the throat combustion flame 16 appearing through the gap between the throat of the converter 2 and the movable hood was successively captured by the spectroscopic camera 6 at the predetermined measurement time interval $\Delta t$ set to 1 sec as in EXAMPLE 1. The image analyzer 7 measured an emission spectrum (image data) from the captured image and executed an analysis of specifying emission wavelengths in the wavelength in a range of 580 to 620 nm in the obtained emission spectrum at each time of measurement and calculating the emission intensity index per wavelength. The wavelength used here (namely, the specific wavelength) was 610 nm. The analysis was performed by executing a line analysis of the image data on any scan line.

The calculations in accordance with the above-described formulae (1) to (3) were executed using the emission intensity index obtained at the specific wavelength at each time of measurement. On that occasion, the constants $L_1$, $L_2$, $m_0$, $m_1$ and $m_2$ in the formulae (1) to (3) were set to the same values as in EXAMPLE 1, but the determination thresholds $C_0$, $C_1$ and $C_2$ were determined as follows. Operation data obtained from 200 heats of the decarburization refining similar to that described in EXAMPLE 1 was divided into four groups depending on the magnitude of an average value of the flow rate of the oxygen gas during the oxygen blowing, and the thresholds were determined for each of the four groups. In other words, the thresholds in the formulae (1) to (3) were each set to four values depending on the magnitude of the average value of the flow rate of the oxygen gas.

In the actual operation, the average value of the flow rate of the oxygen gas was calculated sequentially, and one of the four values of each threshold was used, the one being determined depending on the average value of the flow rate of the oxygen gas. The prediction result indicating the occurrence of the slopping was determined when the formulae (1) to (3) with the thresholds set as described above were all satisfied. At the time when the prediction result indicating the occurrence of the slopping was determined, one or two or more of the adjustment of the flow rate of the oxygen gas from the top blowing lance, the adjustment of the lance height of the top blowing lance, the adjustment of the height position of the movable hood, the adjustment of the flow rate of the oxidizing gas or the inert gas injected from the bottom blowing tuyere, and the addition of the sedation material into the converter were performed in accordance with the same standards as in EXAMPLE 1. Furthermore, at the time when any one of the formulae (1) to (3) was no longer satisfied, the flow rate of the oxygen gas from the top blowing lance, the lance height of the top blowing lance, the height position of the movable hood, and the flow rate of the oxidizing gas or the inert gas injected from the bottom blowing tuyere were returned to the values before the adjustments, and thereafter the decarburization refining was continued.

It was confirmed that, because of determining the determination thresholds in the formulae (1) to (3) as described above, the incidence of the slopping during the decarburization refining can be reduced to a level equal to or lower than the level in EXAMPLE 1 and the decarburization refining can be stabilized.

EXAMPLE 3

As described above, in determining the internal situation of the converter based on the spectral analysis of the throat combustion flame 16, false detection may be resulted in some cases due to change of the situation, such as an event that the visual field is obstructed by the passage of a crane or deposition of a metal to the throat. Therefore, the determination thresholds $C_0$, $C_1$ and $C_2$ in the formulae (1) to (3) are desirably changed in the converter operation per heat.

In consideration of the above point, machine learning of the neural network type was performed by using, as training data, offline analysis data obtained from 2000 heats in each of which the spectral analysis of the throat combustion flame 16 was made. Total 30 items, such as the mass of the molten pig iron, the mass of the iron scrap, the temperature of the molten pig iron before the decarburization refining, the amount of the added auxiliary raw material, the oxygen feed rate (feed rate of the oxygen gas from the top blowing lance) per step in progress of the blowing, the flow rate of the bottom-blown gas, the lance height, the flow rate of the exhaust gas, the composition of the exhaust gas, and the height of the movable hood, were selected as input data, and the number of hidden layers was set to five.

The determination thresholds $C_0$, $C_1$ and $C_2$ in the formulae (1) to (3) were set by a method of determining the thresholds through the machine learning as described above, and the decarburization refining of the molten pig iron was performed in a similar manner to that in EXAMPLE 1 by using the same converter equipment (top and bottom blown converter) as in EXAMPLE 1. The constants $L_1$, $L_2$, $m_0$, $m_1$ and $m_2$ in the formulae (1) to (3) were set to the same values as in EXAMPLE 1.

During an entire blowing time of the decarburization refining, an image of the throat combustion flame 16 blowing out from the throat of the converter 2 was successively captured by the spectroscopic camera 6 at the predetermined measurement time interval $\Delta t$: 1 sec as in EXAMPLE 1. From the captured image, an emission spectrum (image data) was measured and recorded by the image analyzer 7.

The prediction result indicating the occurrence of the slopping was determined when the formulae (1) to (3) were all satisfied. At the time when the prediction result indicating the occurrence of the slopping was determined, one or two or more of the adjustment of the flow rate of the oxygen gas from the top blowing lance, the adjustment of the lance height of the top blowing lance, the adjustment of the height position of the movable hood, the adjustment of the flow rate of the oxidizing gas or the inert gas injected from the bottom blowing tuyere, and the addition of the sedation material into the converter were performed (as INVENTIVE EXAMPLE 3) in accordance with the same standards as in EXAMPLE 1.

For comparing EXAMPLES 1 to 3, the decarburization refining, described in EXAMPLE 1, which was performed after previously setting the determination thresholds $C_0$, $C_1$ and $C_2$ in the formulae (1) to (3) to the predetermined certain values (called INVENTIVE EXAMPLE 1), and the decarburization refining, described in EXAMPLE 2, which was performed after setting the determination thresholds $C_0$, $C_1$ and $C_2$ in the formulae (1) to (3) depending on the magnitude of the average value of the flow rate of the oxygen gas during the oxygen blowing (called INVENTIVE EXAMPLE 2), were also performed.

INVENTIVE EXAMPLES 1, 2 and 3 were each performed over 100 heats. In each of the operations, at the time when the prediction result indicating the occurrence of the slopping was determined, one or two or more of the adjustment of the flow rate of the oxygen gas from the top blowing lance, the adjustment of the lance height of the top blowing lance, the adjustment of the height position of the movable hood, the adjustment of the flow rate of the oxidizing gas or the inert gas injected from the bottom blowing tuyere, and the addition of the sedation material into the converter were performed in accordance with the same standards as in

EXAMPLE 1.

Furthermore, at the time when any one of the formulae (1) to (3) was no longer satisfied, the flow rate of the oxygen gas from the top blowing lance, the lance height of the top blowing lance, the height position of the movable hood, and the flow rate of the oxidizing gas or the inert gas injected from the bottom blowing tuyere were returned to the values before the adjustments, and thereafter the decarburization refining was continued.

Table 3 indicates the operation results in INVENTIVE EXAMPLES 1, 2 and 3. Table 3 further indicates the operation result of the related-art decarburization refining (Related Art) that is performed without predicting the slopping. The incidence of the slopping in Table 3 is given as a percentage representing the number of heats in which the slopping occurred with respect to the total heat number (100 heats).

[Table 3]

| | Spectroscopic Determination | Setting Based on Flow Rate of Oxygen Gas | Machine Learning | Incidence of Slopping (%) | Blowing Time (min) | Amount of Used Sedation Material (kg/t) |
|---|---|---|---|---|---|---|
| INVENTIVE EXAMPLE 1 | ○ | - | - | 16 | 19.3 | 1.7 |
| INVENTIVE EXAMPLE 2 | ○ | ○ | - | 11 | 19.0 | 1.2 |
| INVENTIVE EXAMPLE 3 | ○ | - | ○ | 8 | 18.9 | 0.7 |
| Related Art | - | - | - | 39 | 19.6 | 2.3 |

As seen from Table 3, in INVENTIVE EXAMPLE 3, the incidence of the slopping was low, extension of the blowing due to the occurrence of the slopping was reduced, and the amount of the used sedation material was also reduced. Reference Signs List

1      converter equipment
1A    converter equipment
2      converter
3      top blowing lance
4      bottom blowing tuyere
5      molten pig iron
6      spectroscopic camera
7      image analyzer
8      control computer
9      throat
10    movable hood
11    lance height controller
12    oxidizing-gas flow rate controller
13    bottom-blown gas flow rate controller
14    auxiliary raw-material adding controller
15    movable-hood height position controller
16    throat combustion flame
17    oxidizing-gas jet flow
18    pipe for feeding oxidizing gas to top blowing lance
19    pipe for feeding cooling water to top blowing lance
20    pipe for draining cooling water from top blowing lance
21    machine learning computer

**Claims**

1.  A method for predicting slopping in a converter, the method predicting the slopping occurred during decarburization refining in the converter in which molten steel is produced from molten pig iron by blowing oxidizing gas to the molten pig iron in the converter from a top blowing lance, or additionally blowing oxidizing gas or inert gas from a bottom blowing tuyere to perform the decarburization refining of the molten pig iron, the method comprising:

    measuring an emission spectrum of a throat combustion flame blowing out from a throat of the converter;
    calculating emission intensity of the measured emission spectrum at a wavelength in a range of 580 to 620 nm; and
    predicting occurrence of the slopping based on a time-series change of the emission intensity calculated.

2.  The method for predicting the slopping in the converter according to Claim 1, further comprising detecting an inflection point at which the emission intensity turns to increase again after being once reduced, and predicting the occurrence of the slopping upon detection of the inflection point.

3.  The method for predicting the slopping in the converter according to Claim 1 or 2, wherein the time-series change of the emission intensity is determined using a moving average.

4.  The method for predicting the slopping in the converter according to Claim 1 or 2, wherein the time-series change of the emission intensity is determined in accordance with a determination formula using a moving average.

5.  The method for predicting the slopping in the converter according to Claim 4, wherein formulae (1) to (3) given below are used as the determination formula, and a prediction result indicating the occurrence of the slopping is determined when the formulae (1) to (3) are all satisfied
[Math. 1]

$$I(n, m_0) \geq C_0 \quad \cdots (1)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

where $I(n, m_0)$ denotes a moving average (a.u.) of an emission intensity index from a measurement point $n-m_0$ to a measurement point $n$, $I(n-L_1, m_1)$ denotes a moving average (a.u.) of the emission intensity index from a measurement point $n-L_1-m_1$ to a measurement point $n-L_1$, $I(n-2L_1, m_1)$ denotes a moving average (a.u.) of the emission intensity index from a measurement point $n-2L_1-m_1$ to a measurement point $n-2L_1$, $I(n,m_2)$ denotes a moving average (a.u.) of the emission intensity index from a measurement point $n-m_2$ to the measurement point $n$, $I(n-L_2, m_2)$ denotes a moving average (a.u.) of the emission intensity index from a measurement point $n-L_2-m_2$ to a measurement point $n-L_2$, $C_0$, $C_1$ and $C_2$ are determination thresholds and satisfy relations of $C_0 > 0$, $C_2 > 0$, and $C_1 < C_2$, $L_1$ and $L_2$ are constants and are each an integer of 1 or more, and $m_0$, $m_1$ and $m_2$ are constants and are each an integer of 0 or more.

6.  The method for predicting the slopping in the converter according to Claim 5, wherein the determination thresholds $C_0$, $C_1$ and $C_2$ in the formulae (1) to (3) are determined by utilizing one or more of a transition of the emission intensity, a flow rate of exhaust gas, components of the exhaust gas, a feed rate of oxygen gas from the top blowing lance, and a lance height of the top blowing lance during oxygen blowing.

7.  The method for predicting the slopping in the converter according to Claim 5, wherein the determination thresholds $C_0$, $C_1$ and $C_2$ in the formulae (1) to (3) are determined through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

8.  A method for operating a converter in which molten steel is produced from molten pig iron, when a prediction result indicating occurrence of slopping is determined by the method for predicting the slopping in the converter according to any one of Claims 1 to 7, the method comprising
performing, upon determination of the prediction result indicating the occurrence of the slopping, one or two or more of an adjustment of a flow rate of oxidizing gas blown from the top blowing lance, an adjustment of a lance height of the top blowing lance, an adjustment of a height position of a movable hood, an adjustment of a flow rate of oxidizing gas or inert gas injected from the bottom blowing tuyere, and adding of a sedation material.

**9.** A system for predicting slopping in a converter, the system predicting the slopping occurred during decarburization refining in the converter in which molten steel is produced from molten pig iron by blowing oxidizing gas to the molten pig iron in the converter from a top blowing lance, or additionally blowing oxidizing gas or inert gas from a bottom blowing tuyere to perform the decarburization refining of the molten pig iron, the system comprising:

a spectroscopic camera disposed around the converter and capturing an image of a throat combustion flame through a gap between the converter and a movable hood; and
an image analyzer recording, in a retrievable manner, image data sent from the spectroscopic camera, calculating emission intensity of an emission spectrum of the image data at a wavelength in a range of 580 to 620 nm, and predicting occurrence of the slopping based on a time-series change of the emission intensity calculated.

**10.** The system for predicting the slopping in the converter according to Claim 9, further comprising a control computer issuing a control signal to change an operation condition in accordance with data input from the image analyzer.

**11.** The system for predicting the slopping in the converter according to Claim 9 or 10, wherein the image analyzer detects an inflection point at which the emission intensity turns to increase again after being once reduced, and predicts the occurrence of the slopping upon detection of the inflection point.

**12.** The system for predicting the slopping in the converter according to any one of Claims 9 to 11, wherein the image analyzer calculates the time-series change of the emission intensity in accordance with a determination formula using a moving average.

**13.** The system for predicting the slopping in the converter according to Claim 12, wherein formulae (1) to (3) given below are used as the determination formula, and a prediction result indicating the occurrence of the slopping is determined when the formulae (1) to (3) are all satisfied
[Math. 2]

$$I(n, m_0) \geq C_0 \quad \cdots (1)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

$$\frac{I(n-L_1, m_1) - I(n-2L_1, m_1)}{I(n-2L_1, m_1)} \leq C_1 \quad \cdots (2)$$

$$\frac{I(n, m_2) - I(n-L_2, m_2)}{I(n-L_2, m_2)} \geq C_2 \quad \cdots (3)$$

where $I(n, m_0)$ denotes a moving average (a.u.) of an emission intensity index from a measurement point $n-m_0$ to

a measurement point n, $I(n-L_1, m_1)$ denotes a moving average (a.u.) of the emission intensity index from a measurement point $n-L_1-m_1$ to a measurement point $n-L_1$, $I(n-2L_1, m_1)$ denotes a moving average (a.u.) of the emission intensity index from a measurement point $n-2L_1-m_1$ to a measurement point $n-2L_1$, $I(n,m_2)$ denotes a moving average (a.u.) of the emission intensity index from a measurement point $n-m_2$ to the measurement point n, $I(n-L_2, m_2)$ denotes a moving average (a.u.) of the emission intensity index from a measurement point $n-L_2-m_2$ to a measurement point $n-L_2$, $C_0$, $C_1$ and $C_2$ are determination thresholds and satisfy relations of $C_0 > 0$, $C_2 > 0$, and $C_1 < C_2$, $L_1$ and $L_2$ are constants and are each an integer of 1 or more, and $m_0$, $m_1$ and $m_2$ are constants and are each an integer of 0 or more.

**14.** The system for predicting the slopping in the converter according to Claim 13, wherein the image analyzer includes a machine learning model to determine the determination thresholds $C_0$, $C_1$ and $C_2$ in the formulae (1) to (3) through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

**15.** The system for predicting the slopping in the converter according to Claim 13, further comprising a machine learning computer that includes a machine learning model to determine the determination thresholds $C_0$, $C_1$ and $C_2$ in the formulae (1) to (3) through machine learning by utilizing one or more of a transition of the emission intensity, a flow rate of exhaust gas, components of the exhaust gas, a feed rate of oxygen gas from the top blowing lance, and a lance height of the top blowing lance during oxygen blowing.

FIG. 1

FIG. 2

FIG. 3

FIG. 4

<center>**INTERNATIONAL SEARCH REPORT**</center>

| | International application No. |
|---|---|
| | PCT/JP2020/013154 |

**A. CLASSIFICATION OF SUBJECT MATTER**
C21C 5/30(2006.01)i; C21C 5/46(2006.01)i
FI: C21C5/46 B; C21C5/30 Z
According to International Patent Classification (IPC) or to both national classification and IPC

**B. FIELDS SEARCHED**

Minimum documentation searched (classification system followed by classification symbols)
C21C5/00; C21C5/08-5/50; F27D21/00-21/04

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2019/004157 A1 (JFE STEEL CORPORATION) 03.01.2019 (2019-01-03) claims, paragraphs [0026]-[0042], [0074]-[0075], [0086], [0095], [0111], [0120]-[0124] | 1-4, 8-12<br>5-7, 13-15 |
| Y<br>A | JP 5-98335 A (NKK CORP.) 20.04.1993 (1993-04-20) claims, paragraphs [0014]-[0018] | 1-4, 8-12<br>5-7, 13-15 |
| Y<br>A | JP 6-235015 A (NIPPON STEEL CORP.) 23.08.1994 (1994-08-23) claims, paragraphs [0007]-[0017], fig. 3 | 1-4, 8-12<br>5-7, 13-15 |
| Y | JP 2010-13685 A (NIPPON STEEL CORP.) 21.01.2010 (2010-01-21) paragraphs [0077], [0099] | 3, 4, 12 |
| A | Microfilm of the specification and drawings annexed to the request of Japanese Utility Model Application No. 17865/1987 (Laid-open No. 127964/1988) (NKK CORP.) 22.08.1988 (1988-08-22) entire text | 1-15 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 April 2020 (28.04.2020) | 19 May 2020 (19.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/013154

| Patent Documents referred in the Report | Publication Date | Patent Family | Publication Date |
|---|---|---|---|
| WO 2019/004157 A1 | 03 Jan. 2019 | TW 201905213 A | |
| JP 5-98335 A | 20 Apr. 1993 | (Family: none) | |
| JP 6-235015 A | 23 Aug. 1994 | (Family: none) | |
| JP 2010-13685 A | 21 Jan. 2010 | (Family: none) | |
| JP 63-127964 U1 | 22 Aug. 1988 | (Family: none) | |

Form PCT/ISA/210 (patent family annex) (January 2015)

**REFERENCES CITED IN THE DESCRIPTION**

**Patent documents cited in the description**

- JP 6248321 A
- JP 59041409 A
- JP 6256832 A